# EUROPEAN PATENT SPECIFICATION

(11) **EP 2 484 992 B1**
(45) Date of publication and mention of the grant of the patent: **25.03.2020**
(21) Application number: 10819944.9
(22) Date of filing: 21.09.2010
(51) Int. Cl.: F25B 27/00, F25B 15/04, C09K 5/04, F25B 15/06

(54) **AIR/WATER OR WATER/WATER ABSORPTION WATER COOLER USING AMMONIA AND LITHIUM NITRATE**
LUFT/WASSER- ODER WASSER/WASSER-ABSORPTIONS-WASSERKÜHLER MIT AMMONIAK UND LITHIUMNITRAT
DISPOSITIF DE REFROIDISSEMENT D'EAU PAR ABSORPTION DE TYPE AIR-EAU OU EAU-EAU D'AMMONIAC ET DE NITRATE DE LITHIUM

(30) Priority: 29.09.2009 ES 200930758
(43) Date of publication of application: 08.08.2012
(73) Proprietor: Carrier Corporation, Palm Beach Gardens, FL 33418 (US)
(72) Inventor: BOUROUIS, Mahmoud, E-14550 Montilla (Córdoba) (ES); CORONASSALCEDO, Alberto, E-14550 Montilla (Córdoba) (ES); VALLES RAQUERA, Joan Manuel, E-14550 Montilla (Córdoba) (ES); ZAMORA GARCIA, Miguel, E-14550 Montilla (Córdoba) (ES)
(74) Representative: Lavoix
(86) International application number: PCT/ES2010/070608
(87) International publication number: WO 2011/039397

(56) References cited:
- EP-A2- 1 136 769
- CN-Y- 2 504 570
- JP-A- 2000 121 195
- JP-A- 2002 020 736
- JP-A- 2002 022 309
- JP-A- 2002 022 309
- JP-A- 2002 310 527
- US-A- 4 133 183
- US-A- 4 744 224
- US-A- 5 548 971
- US-A- 5 666 818

## Description

### OBJECT OF THE INVENTION

This invention is an absorption chiller which uses, as refrigerant-absorbent pair, the mixture of ammonia-lithium nitrate and in which all the heat exchangers are brazed plate heat exchangers.

It is an absorption water chiller that operates according to a single-effect cycle designed to incorporate solar energy in air conditioning applications to meet the cooling requirements of buildings for maximum power of 15 kW. The water chiller can operate in water-water or air-water mode depending on the needs of the installation.

### BACKGROUND OF THE STATE OF THE ART

Current technology of absorption devices is based on the use of two conventional mixtures of absorption cycles: H2O-LiBr and NH3-H2O.

The H2O-LiBr mixture has the advantage of providing a higher coefficient of performance (COP) at lower generation temperatures 75°- 90° C. However, the drawback is that it requires a cooling tower as at high temperatures the absorber presents crystallization problems. Thus, the need for the cooling tower makes the equipment expensive, introduces water consumption of 4 kg/h to 6 kg/h per kW of cold and increases maintenance costs associated with compliance with legionella prevention legislation.

The NH3-H2O mixture does not present problems of crystallization as the mixture is soluble in the entire concentration range. This allows dry dissipation although at the cost of activation temperatures that are higher than the H2O-LiBr equipment. So NH3-H2O absorption devices require solar collectors with a higher temperature which makes installation more expensive. Another drawback of the NH3-H2O absorption devices is the relative volatility of water (absorbent) which makes necessary the rectification of the vapours leaving the generator to enable pure ammonia to reach the evaporator. This rectification, which is essential as the presence of water in the evaporator reduces its chilling capacity, penalizes the cycle's COP which results to be lower than that of H2O-LiBr cycles.

In this context, the limitations of both conventional mixtures of absorption cycles have led to the proposal and investigation of new mixtures. These include mixtures that maintain ammonia as refrigerant and propose replacing water as absorbent with salt to eliminate the need to rectify the vapours at the outlet of the generator. This invention proposes the use of lithium nitrate as an absorbent of ammonia. Thus, the advantages of the NH3-LiNO3 mixture over conventional mixtures, are as follows:
a) In comparison with H2O-LiBr mixture it has no problems of crystallization with a cooling cycle using air and it operates at pressures above atmospheric.
b) In comparison with the NH3-H2O mixture it does not require rectification and the activation temperatures of the cycle are lower.

Already in 1931 the GB358844 patent proposed the ammonia-lithium nitrate mixture as working pair for absorption chillers. Recently, Japanese Patent 2002310527, shows an ammonia-lithium nitrate absorption chiller, comprising an evaporator, an absorber, a generator, a condenser and a reservoir that stores ammonia liquid feeding the evaporator.

The document JP 2002 022309 A discloses an absorption type refrigerating machine based in lithium nitride and ammonia as refrigerant equipped with an evaporator for evaporating the refrigerant or ammonia, an absorbing vessel for absorbing the vapor of ammonia evaporated in the evaporator into an absorbing solution, a reproducer for heating thick solution into which ammonia is absorbed in the absorbing vessel to separate ammonia and a condenser for condensing the vapor of ammonia separated in the reproducer. In such a refrigerating machine, lithium nitride is used as the absorbent of the absorbing solution while at least the evaporator, the absorber and the condenser use a plate type heat exchanger. JP2002 022309 A discloses an air-water or water-water ammonia-lithium nitrate absorption water chiller comprising a refrigerant-absorbent pair using ammonia-lithium nitrate mixture, a plate heat exchanger used as an evaporator, a plate heat exchanger used as an absorber, a heat exchanger used as a solution heat exchanger, a heat exchanger used as a generator, a heat exchanger used as refrigerant subcooler, and a plate heat exchanger used as a condenser for the water-water chiller model.

In conclusion, this invention makes possible the activation of the absorption cycle with hot water produced in solar collectors with temperatures between 80 and 110 °C and incorporates, likewise, significant improvements which allow the drawbacks in the previous state of the art in this field to be reduced:
a) The possibility of crystallization of the working fluid.
b) Operation with the water-lithium bromide mixture under vacuum.
c) Difficult refrigerant-solution separation in the ammonia-water mixture.
d) Finally, it is also intended to solve some of the drawbacks associated with the use of a water-water chiller such as the use of a cooling tower, an air-refrigerant or any other heat dissipator whose installation involves large space requirements or health and hygiene problems.

### DESCRIPTION OF THE INVENTION

In order to reduce the above mentioned drawbacks an air-water or water-water ammonia-lithium nitrate absorption water chiller as defined in appended claim 1 is provided. Further aspects of the invention are defined in appended dependent claims. By way of explanation of the "air-water or water-water ammonia-lithium nitrate type water absorption chiller" it consists of a water chiller absorption machine that uses ammonia-lithium nitrate mixture as working pair. All the heat exchangers are brazed plate heat exchangers which improves heat and mass transfer processes, and provides a single-effect cycle designed to incorporate solar energy in air-conditioning applications allowing, also, the cooling requirements of buildings up to maximum power of 15 kW.

Its main components are: plate bubble absorber, plate flow boiling generator, plate condenser and evaporator, plate heat recovery exchanger and plate liquid-vapour heat exchanger, ammonia vapour separator tank and self-regulating valve for the solution flow.

Importantly, the ammonia is the refrigerant while the lithium nitrate acts as the absorbent as it is a salt with a high affinity for ammonia vapour.
The water chiller can therefore operate in water-water or air-water mode depending on the needs of the installation. This is achieved by providing two models of the absorption chiller, air-water and water-water, which are both able to adapt to the needs of any installation. In the water-water model all heat exchangers are corrugated plate heat exchangers. In the air-water model there are two alternatives: the first uses an imbricated finned tube coil, so that part of it is used to condense refrigerant ammonia and the other part to dissipate heat from the cooling water circuit in the absorber. The second alternative is to provide a finned tube coil for cooling the water coming from both the condenser and the absorber.

### DESCRIPTION OF THE DRAWINGS

As a complement to the description and with the aim of providing further insight on the invention's characteristics, the following figures are provided as practical examples of preferred embodiments:
Figure 1.- Diagram of the absorption refrigeration process of the water-water machine.
Figure 2.a.- Scheme of the distribution system of the refrigerant and solution located at the entrance of the absorber.

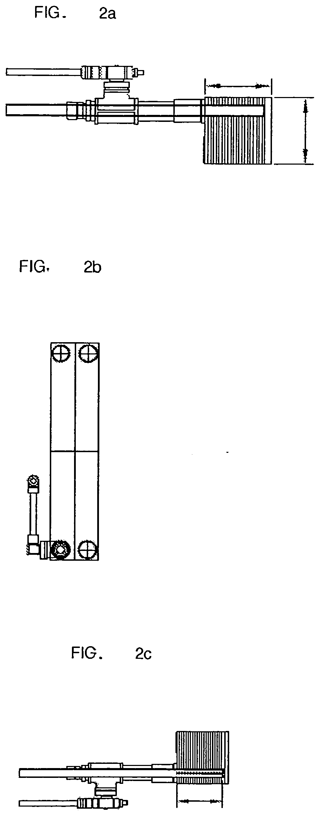

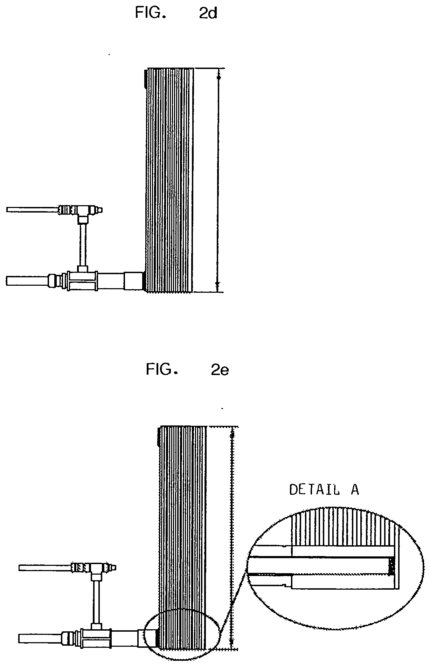

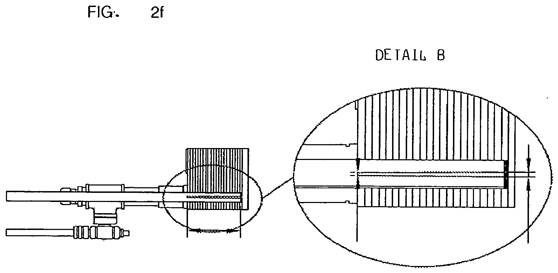

Figure 2.b.- Scheme of the distribution system of the refrigerant and solution located at the entrance of the absorber-Elevation.
Figure 2.c.- Scheme of the distribution system of the refrigerant and solution located at the entrance of the absorber-Lower floor.
Figure 2.d. Scheme of the distribution system of the refrigerant and solution located at the entrance of the absorber-Profile from the left.
Figure 2.e.- Scheme of the distribution system of the refrigerant and solution located at the entrance of the absorber-Profile Detail A.
Figure 2.f.- Scheme of the distribution system of the refrigerant and solution located at the entrance of the absorber-Profile Detail B.

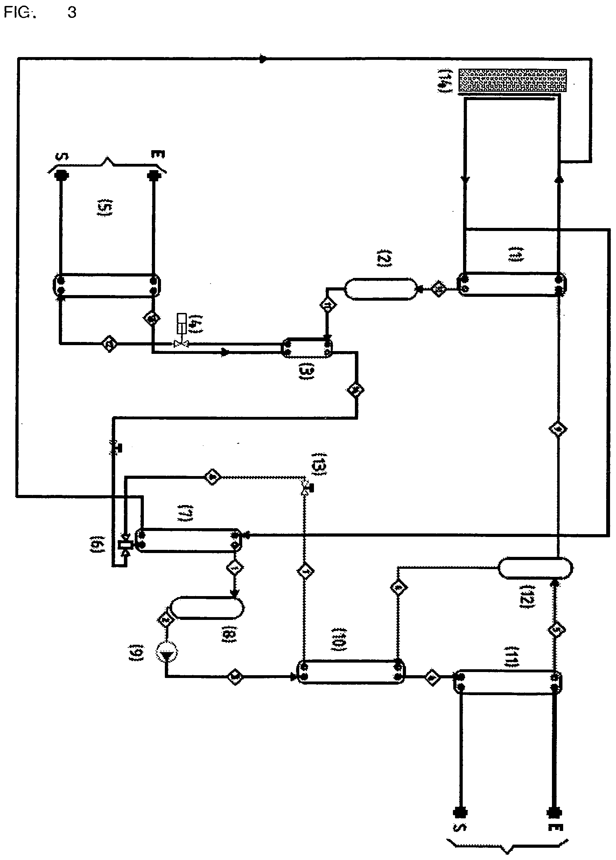

Figure 3.- Diagram of the absorption refrigeration process in the air-water machine.

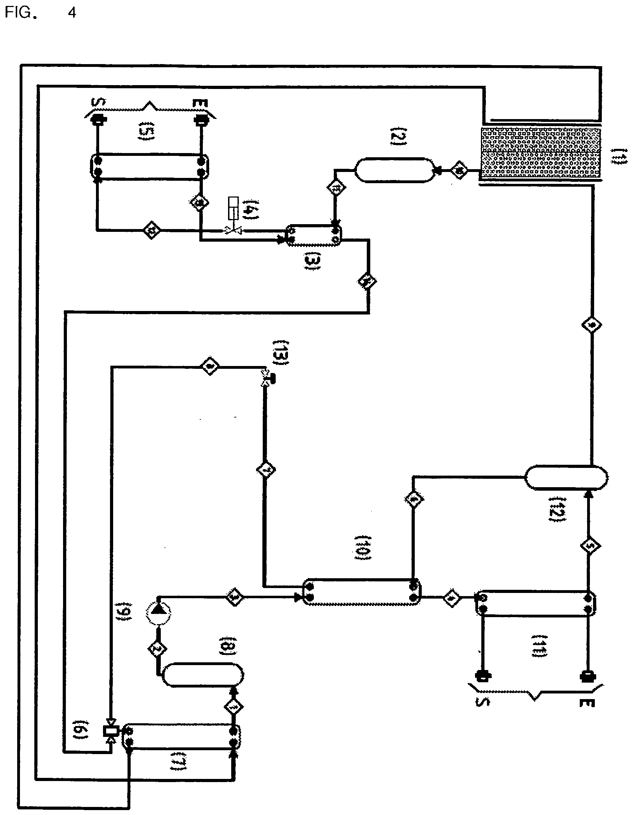

Figure 4.- Diagram of the absorption refrigeration process in the air-water machine with imbricated finned tube coil.

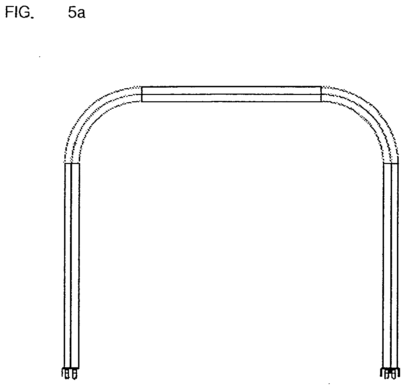

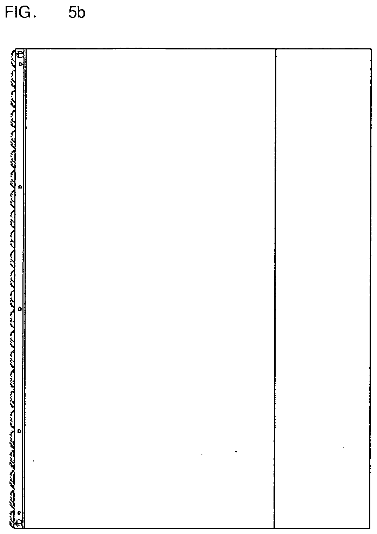

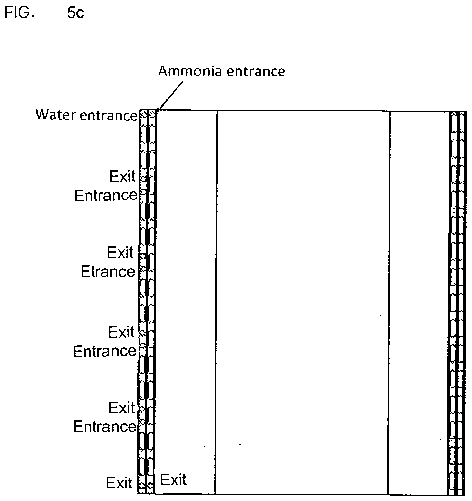

Figure 5.a- Condenser configuration for imbricated steel finned tube coil-Floor.
Figure 5.b- Condenser configuration for imbricated steel finned tube coil-Profile.
Figure 5.c.- Condenser configuration for imbricated steel finned tube coil - front Elevation showing the water circuit

It is also important to emphasize the following elements or constituent parts:
- 1.: Condenser
- 2.: Liquid receiver.
- 3.: Subcooler heat exchanger for the liquid refrigerant.
- 4.: Expansion valve for the liquid refrigerant.
- 5.: Evaporator.
- 6.: Distributor.
- 7.: Absorber.
- 8.: Rich solution tank.
- 9.: Circulation pump.
- 10.: Heat recovery exchanger.
- 11.: Generator.
- 12.: Generator tank.
- 13.: Expansion valve.
- 14.: Water finned tube coil.

### EXAMPLES OF PREFERRED EMBODIMENTS

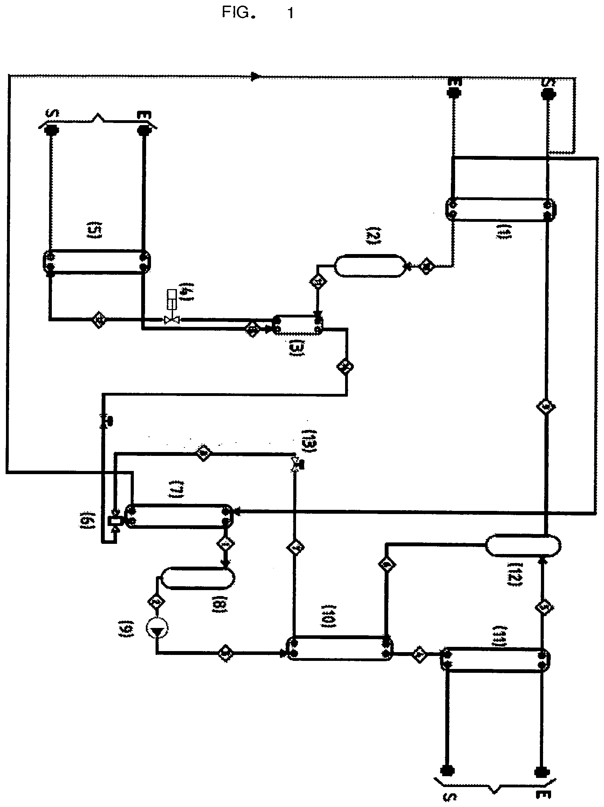

As an example of the preferred implementation of the applicable "water-water ammonia and lithium nitrate absorption water chiller", Figure 1 shows how it contains the following components: a generator (11) where thanks to the heat supplied by solar collectors, refrigerant vapour is obtained and then separated from the solution formed by refrigerant-lithium nitrate, using a separator tank (12) placed behind the generator (11), a condenser (1) for the vapour coming from the previous tank, a liquid receiver (2) of the condensed refrigerant from the condenser, a subcooler (3) for the liquid refrigerant at the tank outlet, a valve (4) to decrease the refrigerant pressure, an evaporator (5) to re-gasify the liquid refrigerant that will pass through, after circulating through the heat exchanger (3), an absorber (7) in which pure ammonia is absorbed in a weak solution (line 8), in order to obtain a rich solution (Line 1) to be passed to a storage tank (8) and then be driven by a pump (9) which increases its pressure and circulates it to the generator after passing it through a recovery (solution) heat exchanger (10). The tank (12) adjacent to the generator provides two streams, one stream of ammonia vapour (Line 9) and another of solution of low concentration in ammonia (poor solution, Line 6) which will reach the absorber after having passed through the heat exchanger (10) and supplying heat to the rich solution coming from the circulation pump. The poor solution cooled in the heat exchanger undergoes a decrease in pressure after passing through a valve (13) placed just before the entrance to the absorber. The expansion valve (13), uses a diaphragm, springs and holes, to automatically regulate its opening without any external power. The valve allows setting the poor solution flow independently of the pressure prevailing in the generator and absorber.

The refrigerant vapour phase is produced from the refrigerant-lithium nitrate solution using a compound generating system that includes a corrugated plate heat exchanger (11) followed by the separator tank (12) where the separation of the two phases takes place, the refrigerant vapour and the poor refrigerant-lithium nitrate solution, obtained in the heat exchanger through the heat supply from a stream of hot water from the solar collectors and circulating in countercurrent to the solution. The solution flows upward in the corrugated plate heat exchanger (11). The inlet temperature of the hot water is between 80° and 110° C.

The connection between the separator tank (12) and condenser (1) occurs so that the vapour outlet is located at the top of the tank to prevent liquid flow in the line (9), while the output of liquid is at the bottom of the tank. This vapour is condensed in a plate exchanger obtaining saturated liquid of ammonia which is stored in the tank (2). Optionally, the vapour can also be condensed in a steel finned tube type heat exchanger.

The refrigerant as saturated liquid flows through the plate heat exchanger (2) to achieve conditions of subcooling and feeds the electronic expansion valve (4), located at the entrance of the evaporator (5), to reduce its pressure as shown in Fig. 1.

In the evaporator consisting of a brazed plate heat exchanger , the subcooled liquid from valve (4) is gasified by means of the heat supplied by a stream of chilled water coming from the building to be conditioned. The impulsion temperature of chilled water can take values between 8° and 15 °C, depending on the building's HVAC system.

The absorption process uses a device consisting of a corrugated plate heat exchanger, in which the refrigerant vapour and the poor solution enter through the lower connection of the heat exchanger, and the rich solution exits through the upper connection. The heat released in the absorption process is dissipated by cooling water flowing in counterflow. Due to the low speed at the input port of the absorber, there is arisk that the poor solution and vapour entering the absorber, will be separated and enter through different channels. To avoid this problem the vapour is injected into the entrance port through a distribution system. Figures 2a, 2b, 2c, 2d and 2f show the refrigerant and solution distribution system located at the absorber entrance. The distribution system starts with a T which connects the refrigerant vapour line and the poor solution line. The vapour line, with a smaller diameter than that of the heat exchanger port, extends to the end of the entrance port of the exchanger. The end of the tube is plugged and in the bottom of the tube an opening has been made of trapezoidal shape with a smaller opening at the beginning of the distribution port which then widens towards the end of the port. The steam outlet area through the opening made in the bottom of the tube is slightly above the passage area of the tube. The tube mentioned by way of example could be implemented with an outer diameter of 19.05 mm and an inside diameter of 16.57 mm, with a trapezoidal opening of 0.2 cm at the beginning of the port and 0.3cm at the end of the port . The solution flows through the annular zone which lies between the steam pipe and the distribution port of the exchanger. The two-phase flow generated then flows in the plate exchanger channels where the absorption process takes place. The heat released in the absorption process is dissipated by cooling water flowing in counterflow to the solution. The inlet temperature of the cooling water to the condenser and absorber is between 35° and 45° C.

The result of the absorption is a refrigerant-salt solution with a high concentration in ammonia which is stored in a tank (8) located at the outlet of the absorber (7). This solution will circulate through the line (2) and then go to the circulation pump (9) which will increase its pressure to the high pressure of the absorption cycle.

The ammonia-rich solution from the circulation pump (9) will increase its temperature in the heat exchanger (10) by circulating in countercurrent to the ammonia-poor solution from the tank (12). Finally the ammonia-rich solution will pass to the generator and the poor solution, after passing through the expansion valve (13), along with the steam line (14) will feed the absorber through the special distributor located at its inlet.

An example of the preferred implementation of the "air-water ammonia-lithium nitrate type water absorption chiller" is shown in figure 3. This shows that there are the same processes of heat and mass transfer as for the water-water type absorption described above and shown in Figure 1. Thus, the only difference between the two types of water absorption chiller is the inclusion of an air-water finned tube coil of copper tubes and fins of aluminum, capable of dissipating the heat of cooling water from both the absorber and the condenser.

Finally, as an example of alternative implementation of the "air-water type ammonia and lithium nitrate absorption water chiller" Figure 4 shows the corresponding process diagram for the case of imbricated finned tube coil

Thus, this absorption refrigeration process scheme only differs from those described in Figure 1 and Figure 3 in the configuration of the condenser. In this case the condenser is a steel imbricated finned tube coil as shown in Figures 5a, 5b and 5c, part of which is intended to condense the refrigerant and the remainder dissipates heat from the cooling water circuit. Thus, the coil consists of two rows of steel tubes with aluminum fins. One of the rows will be used to condense ammonia and the other to cool the cooling water. Each fluid flowing through the coil (ammonia and water) will go along a different circuit in accordance with the needs of the process. The coil will be curved in accordance with the spatial requirements of the structure of the water cooler.

## Claims

1. Air-water or water-water ammonia-lithium nitrate absorption water chiller, comprising a refrigerant-absorbent pair using ammonia-lithium nitrate mixture, a plate heat exchanger used as an evaporator (5), a plate heat exchanger used as an absorber (7), a plate heat exchanger used as a solution heat exchanger (10), a corrugated plate heat exchanger used as a generator (11), a plate heat exchanger used as refrigerant subcooler (3), and a plate heat exchanger used as a condenser (1) for the water-water chiller model or optionally with a coil of finned tubes (14) of steel used as a condenser for the air-water model, further comprising a separator tank (12), a liquid receiver (2), a compound generating system including the corrugated plate heat exchanger (11) and the separator tank (12) where the separation of the two phases takes place, and solar collectors, wherein the solar collectors are connected to the corrugated plate heat exchanger used as the generator (11) to provide hot liquid to the corrugated plate heat exchanger used as the generator (11) to generate refrigerant vapor in the separator tank (12) placed downstream the generator (11) by means of an upper inlet, wherein the refrigerant vapor is provided to the condenser (1) placed downstream the separator tank (12), the condenser (1), is connected with the separator tank (12) by means of a vapor outlet in the top thereof, the liquid receiver (2) is connected to the condenser (1) for receiving the condensed refrigerant, wherein the separation of refrigerant in two phases takes place by means of a stream of hot water at 80°C-11aoc from the solar collectors circulating in countercurrent to the solution which flows upward in the corrugated plate, heat exchanger (11).

2. Air-water or water-water ammonia-lithium nitrate absorption water chiller according to claim 1, wherein the plate heat exchanger used as an absorber (7) is a corrugated plate bubble absorber, wherein the ammonia vapour is injected into the distribution port entrance and is distributed uniformly in the plate heat exchanger using a distributor (6) which acts as a mixer for the gas and liquidstreams, wherein the distributor is located at the absorber (7) inlet and starts with a T which connects the refrigerant vapour line and the poor solution line, wherein the vapour line, with a smaller diameter than that of the exchanger port, extends to the end of the entrance port of the heat exchanger, wherein the end of the tube is plugged and in the bottom of the tube an opening has been made of trapezoidal shape with a smaller opening at the beginning of the distribution port which then widens towards the end of the port, wherein the steam outlet area through the opening made in the bottom of the tube is slightly above the passage area of the tube, wherein the solution flows through the annular zone which lies between the steam pipe and the distribution port of the exchanger, wherein the two-phase flow generated then flows in the plate exchanger channels where the absorption process takes place, and wherein the heat released in the absorption process is dissipated by a stream of cooling water flowing in counterflow to the solution.

3. Air-water or water-water ammonia-lithium nitrate absorption water chiller according to claims 1, and 2,wherein the chiller further comprises a solution expansion valve system (4) which through a diaphragm, springs and hales orifices, automatically auto-regulates without additional external energy supply in the right operating temperature ranges its opening, maintaining the set flow of the poor solution, regardless of the pressure in the generator and the absorber.

4. Air-water or water-water ammonia-lithium nitrate absorption water chillier according to prior claims, wherein the chiller further comprises a coil (14) of steel tubes and aluminum fins embedded in the part of it used for condensing the refrigerant and the remainder for dissipating heat from the cooling water circuit, wherein the coil consists of two rows of steel tubes with aluminum fins, wherein one of the rows will be used to condense ammonia and the other to cool the cooling water, wherein each fluid flowing through the coil (ammonia and water) will go along a different circuit in accordance with the needs of the process, wherein the coil will be curved in accordance with the spatial requirements of the structure of the water cooler.

## Patentansprüche

1. Luft-Wasser- oder Wasser-Wasser-Ammoniak-Lithiumnitrat-Absorptions-Wasserkühler, umfassend ein eine Ammoniak-Lithiumnitrat-Mischung verwendendes Kältemittel-Absorptionsmittel-Paar, einen als Verdampfer (5) verwendeten Plattenwärmetauscher, einen als Absorber (7) verwendeten Plattenwärmetauscher, einen als Lösungswärmetauscher (10) verwendeten Plattenwärmetauscher, einen als Generator (11) verwendeten Riffelplattenwärmetauscher (11), einen als Kältemittelunterkühler (3) verwendeten Plattenwärmetauscher und einen als Verflüssiger (1) verwendeten Plattenwärmetauscher für das Wasser-Wasser-Kühler-Modell oder wahlweise mit einer als Verflüssiger (1) für das Luft-Wasser-Modell verwendeten Spule von Rippenrohren (14) aus Stahl,
weiter umfassend einen Abscheidertank (12), einen Flüssigkeitssammelbehälter (2), ein Verbunderzeugungssystem, beinhaltend den Riffelplattenwärmetauscher (11) und den Abscheidertank (12), in dem die Abscheidung der zwei Phasen stattfindet, sowie Sonnenkollektoren,
wobei die Sonnenkollektoren mit dem als Generator (11) verwendeten Riffelplattenwärmetauscher verbunden sind, um dem als Generator (11) verwendeten Riffelplattenwärmetauscher heiße Flüssigkeit zu liefern, um mittels eines oberen Einlasses Kältemitteldampf in dem zu dem Generator (11) stromabwärts liegenden Abscheidertank (12) zu erzeugen,
wobei der Kältemitteldampf dem zu dem Abscheidertank (11) stromabwärts liegenden Verflüssiger (1) bereitgestellt wird, der Verflüssiger (1) mit dem Abscheidertank (12) mittels eines Dampfauslasses im oberen Teil davon verbunden ist, der Flüssigkeitssammelbehälter (2) mit dem Verflüssiger (1) zum Aufnehmen des verflüssigten Kältemittels verbunden ist,
wobei die Kältemittelabscheidung in zwei Phasen mittels eines Stroms von heißem Wasser bei 80 °C-110 °C von den Sonnenkollektoren stattfindet, der im Gegenstrom zu der Lösung, die in dem Riffelplattenwärmetauscher (11) nach oben strömt, zirkuliert.

2. Luft-Wasser- oder Wasser-Wasser-Ammoniak-Lithiumnitrat-Absorptions-Wasserkühler nach Anspruch 1,
wobei der als Absorber (7) verwendete Plattenwärmetauscher ein Riffelplattenblasenabsorber ist,
wobei der Ammoniakdampf in den Verteilungsanschlusseintritt gespritzt wird und in dem als Verteiler (6) verwendeten Plattenwärmetauscher, der als Mischer für die Gas- und Flüssigkeitsströme fungiert, gleichmäßig verteilt wird,
wobei sich der Verteiler an dem Einlass des Absorbers (7) befindet und mit einem T anfängt, das die Kältemitteldampfleitung und die Leitung der schwachen Lösung verbindet, wobei sich die Dampfleitung, mit einem kleineren Durchmesser als dem des Tauscheranschlusses, zum Ende des Eintrittsanschlusses des Wärmetauschers erstreckt,
wobei das Ende des Rohrs eingesteckt ist und im Boden des Rohrs eine Öffnung mit einer trapezförmigen Form hergestellt worden ist, mit einer kleineren Öffnung am Anfang des Verteilungsanschlusses, die sich dann in Richtung des Endes des Anschlusses weitet,
wobei die Dampfauslassfläche durch die in dem Boden des Rohrs hergestellte Öffnung etwas über der Durchtrittsfläche des Rohrs liegt,
wobei die Lösung durch die ringförmige Zone strömt, die zwischen der Dampfröhre und dem Verteilungsanschluss des Tauschers liegt,
wobei der erzeugte Zweiphasenstrom dann in die Plattentauscherkanäle strömt, in denen der Absorptionsprozess stattfindet, und
wobei die bei dem Absorptionsprozess freigesetzte Wärme durch einen im Gegenstrom zu der Lösung strömenden Kühlwasserstrom abgeleitet wird.

3. Luft-Wasser- oder Wasser-Wasser-Ammoniak-Lithiumnitrat-Absorptions-Wasserkühler nach Anspruch 1 und 2,
wobei der Kühler weiter ein Lösungsausdehnungsventilsystem (4) umfasst, das sein Öffnen ohne zusätzliche äußere Energieversorgung in den richtigen Betriebstemperaturbereichen durch eine Membran, Federn und Löcheröffnungen automatisch selbst reguliert, wodurch der eingestellte Strom der schwachen Lösung ungeachtet des Drucks in dem Generator und dem Absorber aufrechterhalten wird.

4. Luft-Wasser- oder Wasser-Wasser-Ammoniak-Lithiumnitrat-Absorptions-Wasserkühler nach vorhergegangenen Ansprüchen,
bei dem der Kühler außerdem eine Spule (14) aus Stahlrohren und eingebetteten Aluminiumrippen umfasst, deren eines Teil zum Verflüssigen des Kältemittels und der Rest zum Ableiten von Wärme aus dem Kühlwasserkreislauf verwendet wird,
wobei die Spule aus zwei Reihen von Strahlrohren mit Aluminiumrippen besteht, wobei eine der Reihen zum Verflüssigen von Ammoniak und die andere zum Kühlen des Kühlwassers verwendet wird,
wobei jedes durch die Spule strömende Fluid (Ammoniak und Wasser) gemäß den Notwendigkeiten des Prozesses einem unterschiedlichen Kreislauf folgt,
wobei die Spule in Übereinstimmung mit den räumlichen Anforderungen an die Struktur des Wasserkühlers gebogen ist.

## Revendications

1. Refroidisseur d'eau à absorption de nitrate ammoniac-lithium air/eau ou eau/eau, comprenant une paire de réfrigérant/absorbant qui utilise un mélange de nitrate ammoniac-lithium, un échangeur thermique à plaques utilisé comme évaporateur (5), un échangeur thermique à plusieurs utilisé comme absorbeur (7), un échangeur thermique à plaques utilisé comme échangeur thermique à solution (10), un échangeur thermique à plaques ondulées utilisé comme générateur (11), un échangeur thermique à plaques utilisé comme sous-refroidisseur à réfrigérant (3), et un échangeur thermique à plaques utilisé comme condenseur (1) pour le modèle de refroidisseur eau/eau ou avec une bobine de tubes à ailettes (14) en acier utilisée comme condenseur pour le modèle air/eau, comprenant en outre un réservoir séparateur (12), un récepteur de liquide (2), un système de génération de composés comprenant l'échangeur thermique à plaques ondulées (11) et le réservoir séparateur (12) dans lequel la séparation des deux phases a lieu, et des collecteurs solaires, dans lequel les collecteurs solaires sont reliés à l'échangeur thermique à plaques ondulées utilisé comme générateur (11) afin de fournir du liquide chaud à l'échangeur thermique à plaques ondulées utilisé comme générateur (11) de façon à générer de la vapeur de réfrigérant dans le réservoir séparateur (12) placé en aval du générateur (11) à l'aide d'une admission supérieure, dans lequel la vapeur de réfrigérant est fournie au condenseur (1) placé en aval du réservoir séparateur (12), le condenseur (1) est relié au réservoir séparateur (12) à l'aide d'une évacuation de vapeur dans la partie supérieure de celui-ci, le récepteur de liquide (2) est relié au condenseur (1) afin de recevoir le réfrigérant condensé, dans lequel la séparation du réfrigérant en deux phases a lieu à l'aide d'un flux d'eau chaude à 80°C-110°C depuis les collecteurs solaires qui circule à contre-courant par rapport à la solution qui circule vers le haut dans l'échangeur thermique à plaques ondulées (11).

2. Refroidisseur d'eau à absorption de nitrate ammoniac-lithium air/eau ou eau/eau selon la revendication 1, dans lequel l'échangeur thermique à plaques utilisé comme absorbeur (7) est un absorbeur de bulles à plaques ondulées, dans lequel la vapeur d'ammoniac est injectée dans l'entrée de l'orifice de distribution et est distribuée uniformément dans l'échangeur thermique à plaques à l'aide d'un distributeur (6) qui agit comme un mélangeur pour les flux de gaz et de liquide, dans lequel le distributeur est situé au niveau de l'admission de l'absorbeur (7) et commence par un T qui relie la conduite de vapeur de réfrigérant et la conduite de solution appauvrie, dans lequel la conduite de vapeur, avec un diamètre inférieur à celui de l'orifice d'échangeur, s'étend jusqu'à l'extrémité de l'orifice d'entrée de l'échangeur thermique, dans lequel l'extrémité du tube est bouchée et, dans la partie inférieure du tube, une ouverture a été créée avec une forme trapézoïdale et avec une ouverture plus petite au début de l'orifice de distribution, qui s'élargit ensuite vers l'extrémité de l'orifice, dans lequel la zone d'évacuation de la vapeur à travers l'ouverture créée dans la partie inférieure du tube se trouve légèrement au-dessus de la zone de passage du tube, dans lequel la solution circule dans la zone annulaire qui se trouve entre la conduite de vapeur et l'orifice de distribution de l'échangeur, dans lequel l'écoulement à deux phases généré circule ensuite dans les canaux de l'échangeur thermique dans lesquels le processus d'absorption a lieu, et dans lequel la chaleur libérée lors du processus d'absorption est dissipée par un flux d'eau de refroidissement qui circule à contre-courant par rapport à la solution.

3. Refroidisseur d'eau à absorption de nitrate ammoniac-lithium air/eau ou eau/eau selon les revendications 1 et 2, dans lequel le refroidisseur comprend en outre un système de vanne d'expansion de solution (4) qui, à l'aide d'un diaphragme, de ressorts et d'orifices, régule automatiquement, sans alimentation en énergie externe supplémentaire sur la plage de températures de fonctionnement adéquate, son ouverture, afin de maintenir le débit prévu de la solution appauvrie, quelle que soit la pression dans le générateur et l'absorbeur.

4. Refroidisseur d'eau à absorption de nitrate ammoniac-lithium air/eau ou eau/eau selon les revendications précédentes, dans lequel le refroidisseur comprend en outre une bobine (14) de tubes en acier et des ailettes en aluminium intégrées dans la partie de celui-ci utilisée pour condenser le réfrigérant, et le reste pour dissiper la chaleur issue du circuit d'eau de refroidissement, dans lequel la bobine se compose de deux rangées de tubes en acier avec des ailettes en aluminium, dans lequel l'une des rangées est utilisée pour condenser l'ammoniac et l'autre pour refroidir l'eau de refroidissement, dans lequel chaque fluide qui circule dans la bobine (ammoniac et eau) passe le long d'un circuit différent selon les besoins du processus, dans lequel la bobine est incurvée selon les exigences spatiales de la structure du refroidisseur d'eau.
